# EUROPEAN PATENT SPECIFICATION

(11) **EP 0 718 622 B1**
(45) Date of publication and mention of the grant of the patent: **02.05.2003**
(21) Application number: 95301079.0
(22) Date of filing: 21.02.1995
(51) Int. Cl.: G01N 21/76, C12M 1/34

(54) **Apparatus and method for measuring chemiluminescence**
Verfahren und Vorrichtung zur Messung der Chemilumineszenz
Procédé et dispositif de mesure de la chimioluminescence

(30) Priority: 20.12.1994 JP 31666794
(43) Date of publication of application: 26.06.1996
(73) Proprietor: BIOSENSOR LABORATORIES CO., LTD., Toshima-ku, Tokyo (JP)
(72) Inventor: Honzawa, Katsu, Hamamatsu-shi, Shizuoka-ken (JP); Atsumi, Kazuhiro, Hamamatsu-shi, Shizuoka-ken (JP); Shimomura, Fumihiko, Hamamatsu-shi, Shizuoka-ken (JP); Masuko, Masayuki, Hamamatsu-shi, Shizuoka-ken (JP); Hayakawa, Tsuyoshi, Hamamatsu-shi, Shizuoka-ken (JP)
(74) Representative: West, Alan Harry

(56) References cited:
- EP-A- 0 286 119
- EP-A- 0 616 208
- WO-A-83/03138
- PATENT ABSTRACTS OF JAPAN vol. 014, no. 565 (P-1143), 17 December 1990 & JP 02 242159 A (JEOL LTD), 26 September 1990,
- ISA TRANSACTIONS, 1981, USA, vol. 20, no. 1, ISSN 0019-0578, pages 29-33, XP002030639 BULICH A A ET AL: "Use of the luminescent bacterial system for the rapid assessment of aquatic toxicity"

## Description

The present invention relates to an apparatus and a method for quantitatively measuring luminescence such as bioluminescence or chemiluminescence caused when a sample solution and a luminous reagent are mixed.

When a luminous reagent is mixed with a sample solution containing organism cells or chemical substances, the solution may then be quantitatively analyzed by measuring luminescence Generally, when the duration of the luminescence is long, the luminous reagent can be mixed with the sample solution outside the chemiluminescence measuring apparatus before the solution mixture is placed in the apparatus. However, when luminescence is only short duration, accurate quantitative analysis cannot be performed according to the above procedure.
Apparatus for measuring luminescence of only a short duration is described, for example, in Laid-Open Japanese Patent Applications No. 4-29040 and No. 1-22994, and Laid-Open Japanese Utility model Application No. 63-161351.

Luminescence detecting/measuring devices are described also in WO 83/03138A, EP 0616208A and JP 02242159A. The luminescence test apparatus of WO 83/03138A comprises a photometer and associated readout, an injection assembly and a shutter-incorporating holder for receiving a cuvette or other receptacle containing the sample to be tested. The injection assembly includes a barrel housing, a cap, a supply tube, an injector and a surrounding protecting guide. A rotatable shutter mechanism is incorporated as a part of the holder and employs coaxial hollow shutter elements designed to block all passage of light except when ports in the elements are aligned. After the sample-carrying cuvette is placed axially within the hollow shutter elements, the injection assembly is lowered into place. The cap fits about the top of the movable shutter element, and the protecting guide axially aligns the upper end of the cuvette and retracts upward so the injector projects thereinto. The injector directs liquid against the sidewall of the cuvette at a location just above the level of the sample to initiate swirling and rapid, thorough mixing, and as a result, reproducible test results are achieved.

In EP 0616208A, there is described a method and apparatus for determining a plurality of substances or constituents of a specimen sample including the steps of placing a single specimen sample in a reaction vessel or test tube and adding at least two reagents to the reaction vessel to form a detectable product and then initiating a reaction within the vessel and provide an emission of light energy in a predetermined spectral range. The reaction vessel is disposed in a chamber of a housing and a plurality of detector assemblies are disposed about the housing with portions of the detector assemblies disposed through the housing and exposed to the reaction vessel. Each of the detector assemblies receives a portion of the light emission and feeds such portion to a detector. Each of the detectors detect the existence of light emissions in one of a plurality of spectral ranges and feeds that information to processing circuitry to provide data for determining the presence of a specific specimen substance(s) or constituent(s) based upon the detected luminescence.

JP 02242159A describes a system in which a light-emitting reaction is carried out in a tube within a sphere coated internally with light reflecting material. The precise location of the tube within the sphere and any flaws in the wall of the tube are compensated by the reflective coating.

A further luminometer is described in the prior art document ISA TRANSACTIONS, 1981, USA, vol. 20, no. 1, ISSN 0019-0578, pages 29-33, XP002030639 BULICH A A ET AL: 'Use of the luminescent bacterial system for the rapid assessment of aquatic toxicity'.

The present invention seeks to provide luminescence measuring apparatus which is small in size and high in operability, and has the ability to perform accurate quantitative analysis. Further, the invention seeks to provide a method for performing accurate quantitative analysis which is superior to the conventional techniques.

The apparatus of the invention is characterised by the presence of a holding and locating ring by means of which the tip of a reagent vessel, for example a pipette, may be securely positioned on the apparatus in a light-proof manner in order to introduce for example luminescent reactant into a sample solution, and which can be rapidly and reliably substituted by the tip of another pipette, for example for introducing a different luminescent reactant, without the requirement cleaning/decontaminating any part of the apparatus.

In accordance with the invention, there is provided an apparatus for measuring chemiluminescence, the apparatus comprising:
a housing having a top opening;
a cover to close the top opening, the cover having a through hole whereby the distal end of a first vessel containing a luminous reagent may be introduced into the housing from externally thereof;
a hollow chamber within the housing and having a side opening, the hollow chamber permitting a second vessel for a sample solution to be partially contained therein;
a holder disposed in the housing and incorporating the top opening and having a recess defining with the cover a first space and having a through hole whereby the first space communicates with the inner space of the hollow chamber at the bottom of the recess;
a photo-sensing unit disposed in the housing for detecting luminescence emitted from the second vessel via the side opening in the hollow chamber; and
a shutter mechanism for selectively optically shielding luminescence from the photo-sensing unit;
characterised in that a ring for holding the first vessel at a predetermined position, is disposed in the first space and has a through hole whereby the distal end of the first vessel may be introduced into the second vessel, the diameter of the through hole of the ring being smaller than that of the through hole of the cover.

Preferably, the apparatus further comprises a tip guide in the form of a hollow member detachably mounted in the through holes of the cover and the guide member; and
a tip member attachable to a portion of the first vessel whereby the tip guide and the tip member cooperate to seal the housing when the distal end of the first vessel carrying the tip member is introduced via the tip guide into the housing.

In accordance with the invention, there is provided also a method for measuring chemiluminescence using such apparatus, the method comprising the steps of:
disposing a second vessel containing a sample solution in the housing and closing the cover;
introducing the distal end of the first vessel carrying the tip member into the second vessel by way of the ring;
introducing luminous reagent contained in the first vessel into the second vessel; and
detecting luminescence from the second vessel.

The first vessel will generally be conventional cuvette and the second vessel will generally be a syringe such as a convention pipette, for example a micropipette, with a conventional replaceable tip.

The apparatus of the invention has a structure which permits simple and rapid installation, and removal of the sample syringe 42 and which permits simple and rapid installation and removal of the micro-sample tube 21.

If the sample solution may scatter and adhere to the tank, the tube, and other mechanisms, or microorganisms may propagate in sample solution deposits to serve as contaminant sources, such contaminant sources interfere with luminescence from the solution mixture or become unnecessary luminescence sources, thereby interfering with accurate quantitative analysis. The apparatus of the invention prevents propagation of undesirable organisms.

Although a previously used luminous reagent must be completely removed when a different luminous reagent is to be used, the invention does not necessitate the above cleaning.

Further, since the apparatus of the present invention does not necessitate movement of the first or second vessel, the apparatus does not has an automatic injecting mechanism. Therefore, the overall chemiluminescence measuring apparatus is small in size and superior in terms of operability and installation.

In performing quantitative analysis, the vessel in which a sample solution is stored is housed in the hollow chamber in the dark box portion (housing made of nontransparent material), and the tip member is mounted on the tip guide to maintain the sample solution in a perfectly dark state. The optical path between the second vessel and the photo-sensing unit is opened by the shutter mechanism to allow detection of luminescence from the sample solution. A luminous reagent stored in the tip member in advance is injected into the second vessel by operating the reagent syringe. As a result, luminescence from the sample solution is detected. In addition, a change in luminescence over time can be measured in real time by displaying the luminescence on a monitor or the like on the basis of a signal output from the photo-sensing unit.

Details and features of the apparatus of the present invention will become more fully understood from the detailed description given hereinbelow with reference to the accompanying drawings which are given by way of illustration only, and in which:

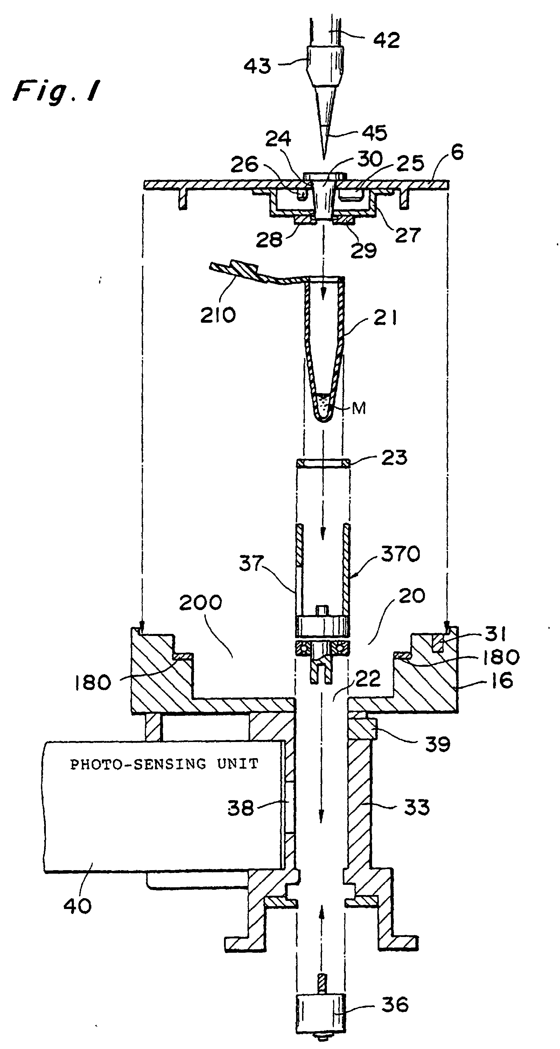

Fig. 1 is a sectional view showing the structure of an apparatus according to the invention;
Fig. 2 is a sectional view showing the structure of the cover of the apparatus in Fig. 1;
Fig. 3 is a side view of a chemiluminescence measuring apparatus according to the invention;
Fig. 4 is a top view of the apparatus of Fig 3;
Fig. 5 is a front view of the apparatus of Fig. 3;
Fig. 6 is a sectional view showing the structure of the shutter mechanism of the apparatus of Fig.1;
Fig. 7 is a block diagram showing the control system of an apparatus of the invention;
Fig. 8 is a sectional view showing the internal structure of the apparatus of Fig.1; and
Fig. 9 is a sectional view illustrating operation of the apparatus of Fig. 8.

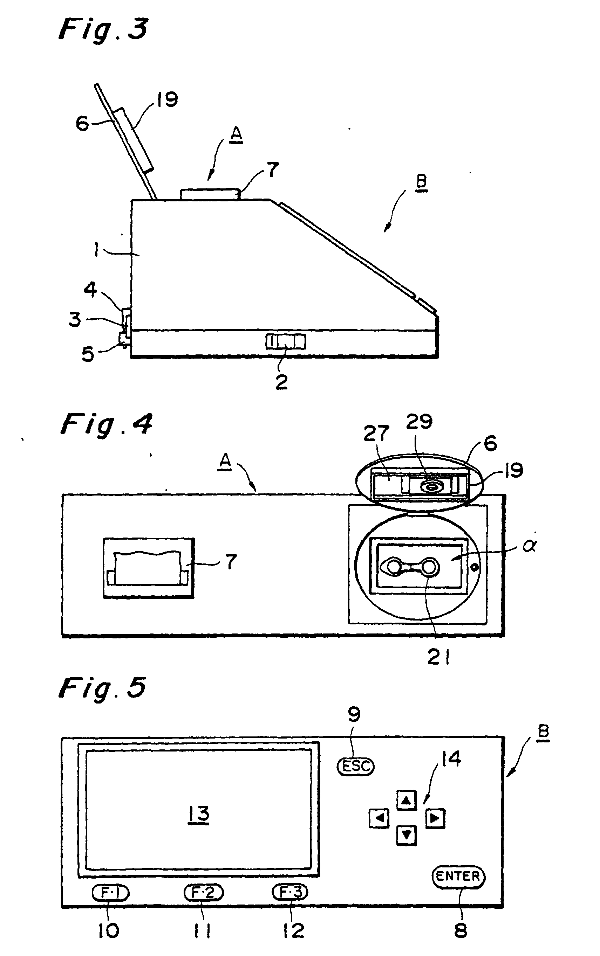

Referring to the accompanying drawings, the outer structure of the apparatus will be described first with reference to Figs. 3 to 5. Fig. 3 is a side view of the apparatus, Fig. 4 is a top view showing the structure of a main portion arranged on the upper portion of the apparatus and Fig. 5 is a front view showing the structure of a main portion arranged on the front surface of the apparatus.

Referring to Fig. 3, a power switch 2 for turning on/off a commercial AC power supply is arranged on a side surface of a box-like housing 1. An input/output port is arranged on the rear surface of the housing 1. The input/output port includes an electrical outlet 3 for connection of a power cable, a connector 4 conforming to the RS232C standard and designed to exchange data with an external computer system and various measuring devices (not shown), an external coruglector (coaxial connector) 5 for outputting a detection signal, which is generated in a measuring operation (to be described later), to the above computer system and various measuring devices and the like.

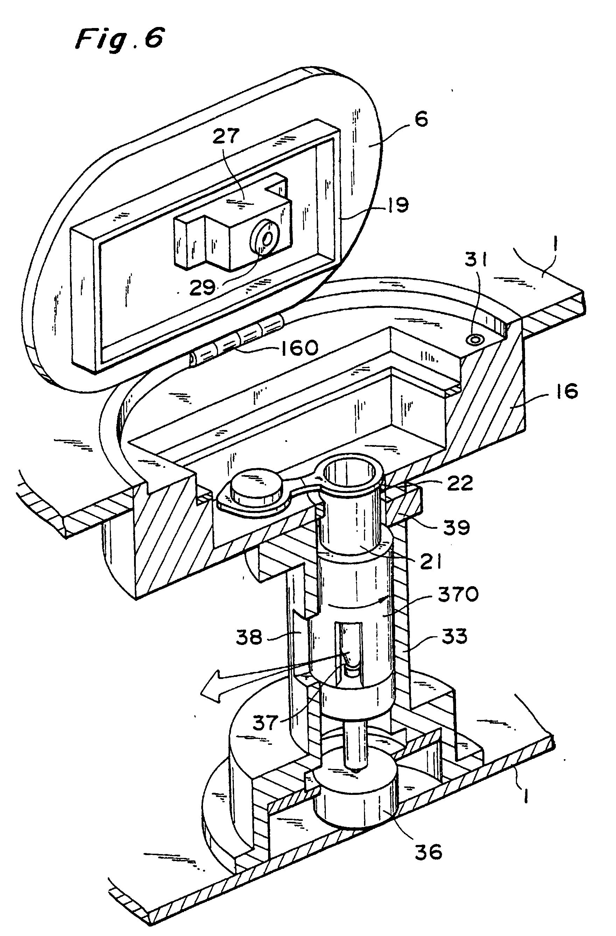

A cover 6 is pivotally mounted on the top surface of the housing 1 by a hinge mechanism 160 (see Fig.6).

In addition, as shown in Fig. 4, a mount portion α (a recess portion of the holder 16) on which a micro-sample tube 21 (to be described later) is to be mounted is arranged on an upper portion A of the housing 1. As shown in Fig. 4, the mount portion α is exposed to the outside when the cover 6 is opened, and is shielded from the outside when the cover 6 is closed. A printer 7 is incorporated in the upper portion A of the housing 1. The printer 7 prints, for example, a plot or numerical values to indicate a change in the detection signal over time.

Furthermore, as shown in Fig. 5, an operation panel is arranged on an inclined front surface B of the housing 1. The operation panel includes a control key 8 for instructing a measuring mechanism (described below) incorporated in the housing 1 to execute measurement, a cancel key 9 for stopping the execution halfway, function keys 10, 11, and 12 for selecting various measuring operations (measurement menu), a liquid crystal display 13 and a multifunction key 14.

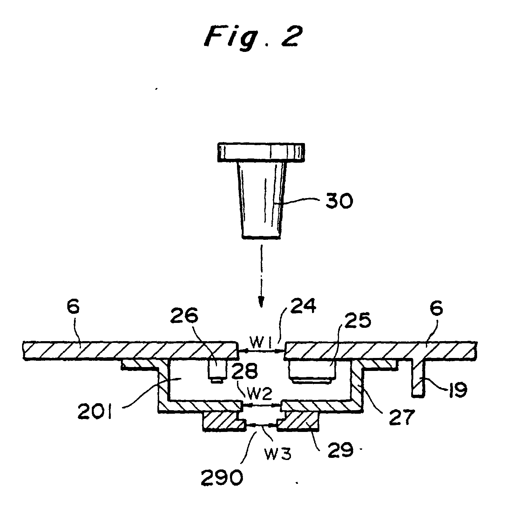

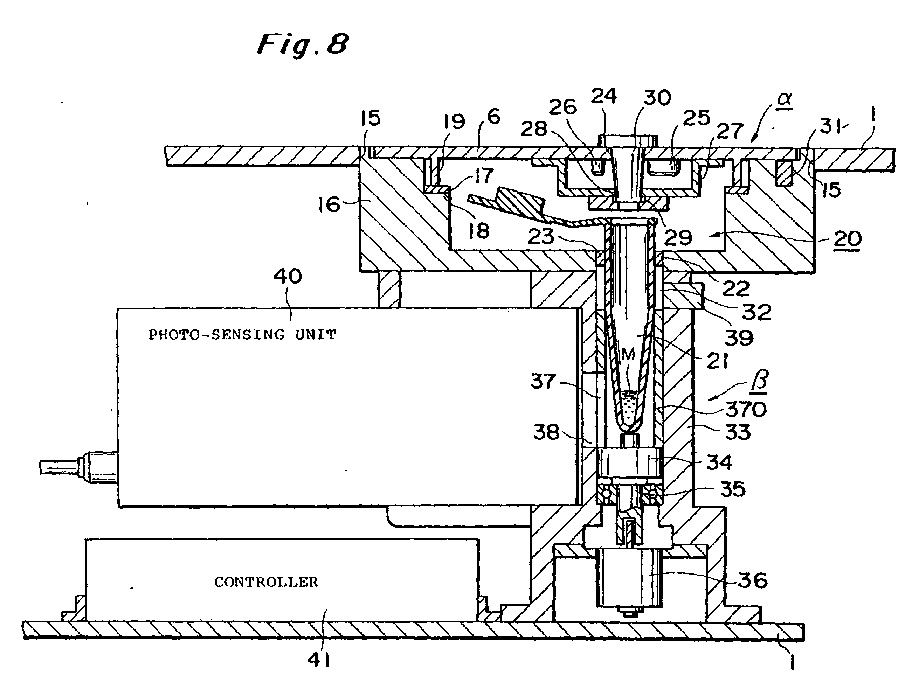

Fig. 6 shows the structure of a shutter mechanism of an apparatus of the invention. The apparatus for measuring chemiluminescence comprises a box-like housing 1 as a casing for the shutter mechanism and photo-sensing mechanism. The housing 1 is made of nontransparent material, and has a top opening 15 (See Fig 8). The hinged cover 6 for the opening is in contact with a guide member 27 having a through hole containing an O-ring 29 having a through hole. A projection 19 is provided on the inner surface of the cover 6. Since the through hole of the O-ring 29 has a smaller diameter (W3) than that (W1) of the cover 6 (see Fig.2), the O-ring 29 holds the guide member 30 which is a tapered hollow member whereby the luminous reagent syringe 42 is held at a predetermined position.

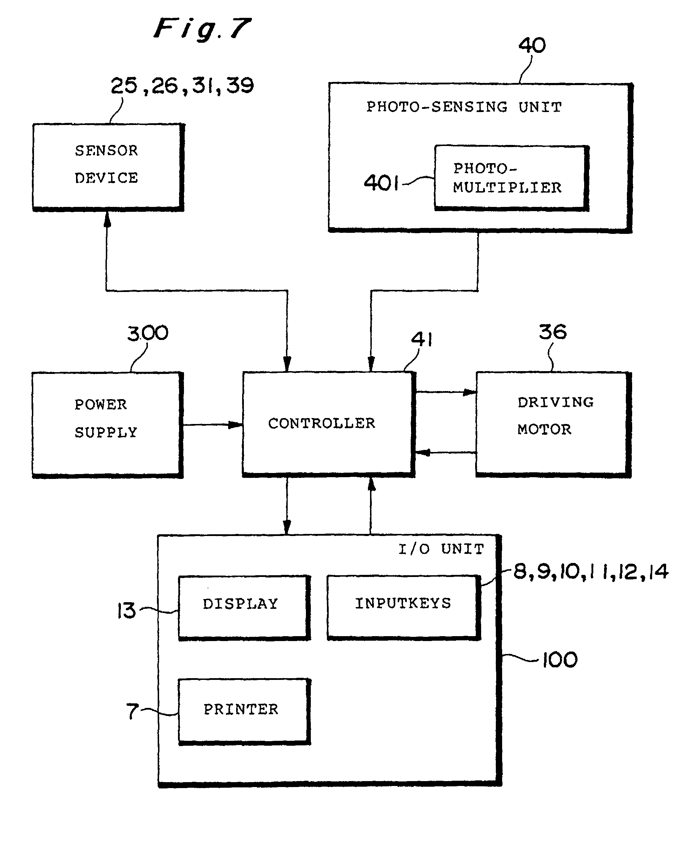

As shown in Fig. 6, the hollow chamber 33 is disposed in the housing 1 and has a side opening 38. The interior of the hollow chamber 33 accommodates part of a micro-sample tube 21 containing a sample solution. The holder 16 is disposed on the hollow chamber 33 and has the through hole 22 connecting the interior (the hollow space 32) of the hollow chamber 33 to the space 20. The distal end of the luminous reagent syringe 42 is partially inserted into the interior of the hollow chamber 33 via the through hole of the holder 16. The rotating cylindrical hollow chamber 370 having a side opening 37 and the driving motor 36 for rotating the chamber 370 are disposed in the hollow chamber 33, and the optical path between the photo-sensing unit 40 and the luminous reagent syringe 42 is opened when the the opening 38 and the opening 37 align. Fig. 7 shows a control system of the embodiment of the present invention. The controller 41 is supplied power from the power supply 300 and observes the signals from sensors 26, 31 and 39 as sensor devices. For example, if the controller 41 receives signals from the photodiode 26, the guide member 30 will not be present; if the controller 41 receives signals from the optical sensor 31, the cover 6 will be closed; if the controller 41 receives signals from the optical sensor 39, the luminous reagent syringe 42 will not be present; if the controller does not receive signals from one or more of the sensors 26, 31 and 39, the controller 41 displays a predetermined message on the liquid crystal display 13 in I/O unit 100. On the other hand, the controller 41 measures of chemiluminescence after receiving the instruction signals from various input keys 8, 9, 10, 11 and 12 of I/O unit 100. In measuring chemiluminescence, the controller 41 outputs the instruction signals to move the driving motor 36, whereby the shutter mechanism intermittently closes the optical path between the photo-sensing unit 40 and the micro-sample tube 21. After the photo-sensing unit 40 intermittently receives luminescence from the micro-sample tube 21 by the photomultiplier 401, the controller 41 outputs signals to I/O unit 100 in order to display the data on the liquid crystal display 13 or print the data by the printer 7.

The arrangement of the measuring mechanism will now be described with reference to Fig. 8. Note that the measuring mechanism is constituted by a plurality of portions having different functions, and includes the mount portion α (the recess of the holder 16) on which the micro-sample tube 21 is to be mounted, and an photo-sensing mechanism β for detecting luminescence from the sample solution in the micro-sample tube 21.

A substantially cup-like holder 16 is fixed in an opening 15 formed in the upper portion of the housing 1, and the recess in the holder 16 is opened/closed by the cover 6 mounted on one end of the holder 15 by the hinge mechanism 160. A stepped portion 18 on which a seal member 17 consisting of a rubber material or the like having relatively high viscosity is secured, is formed on the inner wall of the holder 16. When the cover 6 is closed, a projection 19 extending from the inner side of the cover 6 is engaged with the stepped portion 18 and brought into light contact with the seal member 17, thereby preventing leakage of external light into the internal space 20 of the holder 16.

A through hole 22 in which the micro-sample tube 21 is to be fitted, is formed in the bottom surface of the holder 16. The micro-sample tube 21 is an elongated vessel consisting of a transparent or semitransparent material, which transmits light. That is, the micro-sample tube 21 is an elongated vessel in the form of a test tube, which is used to store the sample solution.

A through hole 24 is formed in the cover 6 to align with the through hole 22 while the recess of the holder 16 is closed by the cover 6. In addition, an optical sensor constituted by a light-emitting diode (LED) 25 and an opposed photodiode (PD) 26 is mounted at the entrance of the through hole 24. When light emitted from the light-emitting diode 25 is blocked upon mounting of the tip guide and the tip in the through hole 24, the photodiode 26 detects the presence of these items and outputs a passage detection signal.

A cup-like guide member 27 is fixed on the inner side of the cover 6, and a through hole 28 is formed in the bottom end of the guide member 27 to align with the through hole 24. An O-ring 29 is fitted on the inner peripheral portion of the through hole 28. A conical tip guide 30 is mounted in the through holes 24 and 28 and the O-ring 29.

The tip guide 30 consists of a material which does not allow transmission of light, and has a hollow portion in which a tip member 43 to be mounted on the distal end of the luminous reagent syringe 42 is inserted. With this arrangement, the hollow portion of the tip guide 30 opposes the upper opening of the micro-sample tube 21 while the concave portion of the holder 16 is closed by the cover 6. In addition, the tip guide 30 is stably held in the through holes 24 and 28, owing to the clamping force of the O-ring 29. The tip guide 30 is detachably mounted in the through holes 24 and 28 so that the tip guide 30 can be replaced with a new tip guide 30 or properly cleaned to be reused.

An optical sensor 31 is mounted on one end of the holder 16. The optical sensor 31 optically detects the open/closed position of the cover 6 and outputs an open/closed position detection signal. This signal is supplied to the controller 41 (to be described later) together with a detection signal from the photodiode 26.

The photo-sensing mechanism β includes a cylindrical hollow chamber 33 having a cylindrical space 32 communicating with the space 20 via the through hole 22 formed in the bottom surface of the holder 16. A rotating cylindrical member 370 (including a metal column 34) having a space for housing the micro-sample tube 21 is arranged in the hollow chamber 33. Note that the size of the cylindrical hollow chamber 33 is designed to be large enough to prevent contact with the side wall of the micro-sample tube 21.

The lower end (the metal column member 34) of the rotating cylindrical hollow chamber 370 is located in the cylindrical hollow chamber 33 to be rotatable and is supported by a bearing mechanism 35 coupled to the driving shaft of a motor 36 mounted on the lower portion of the cylindrical hollow chamber 33. With this arrangement, the cylindrical hollow chamber 370 is driven by the motor 36 and rotated within the hollow space 32 of the cylindrical hollow chamber 33 without contacting the side wall of the micro-sample tube 21. Note that the lower end of the micro-sample tube 21 is in contact with the bottom portion of the hollow chamber 32.

However, since this contact surface corresponds to the rotational center of the cylindrical hollow chamber 370, the micro-sample tube 21 does not move upon rotation of the cylindrical hollow chamber 370.

Openings 37 and 38 are respectively formed at one side of the cylindrical hollow chamber 370 and one side of the cylindrical hollow chamber 33 to align with the lower side portion of the micro-sample tube 21. When the cylindrical hollow chamber 370 is rotated, the openings 37 and 38 align only at a predetermined times, but the opening 38 of the cylindrical hollow chamber 33 is closed by the side wall of the rotating cylindrical hollow chamber 370 at other times.

An optical sensor 39 is mounted on one side of the cylindrical hollow chamber 33. The optical sensor 39 optically detects insertion of the micro-sample tube 21 and supplies the detection signal to the controller 41. The cylindrical hollow chamber 33 has a sealed structure for preventing leakage of external light into the hollow space 32. That is, the cylindrical hollow chamber 33, the cover 6, and the holder 16, constitute a dark box for preventing leakage of external light into the hollow space 32 in which the micro-sample tube 21 is housed.

A high-sensitivity photo-sensing unit 40 is fixed on the outer side of the cylindrical hollow chamber 33 such that the imaging plane aligns with the opening 38. The photo-sensing unit 40 has a photomultiplier 401 for detecting feeble light received via the opening 38. For example, a sensor R-647-04 or R5610 available from Hamamatsu Photonics can be used as the sensor device in the photo-sensing unit 40. A signal output from the photo-sensing unit 40 is transmitted to the controller 41 incorporating a microcomputer system.

The coupling portion between the cylindrical hollow chamber 33 and the photo-sensing unit 40 is also sealed to prevent entrance of external light. Further, in the coupling portion, there may be a filter for transmitting light of a predetermined wavelength.

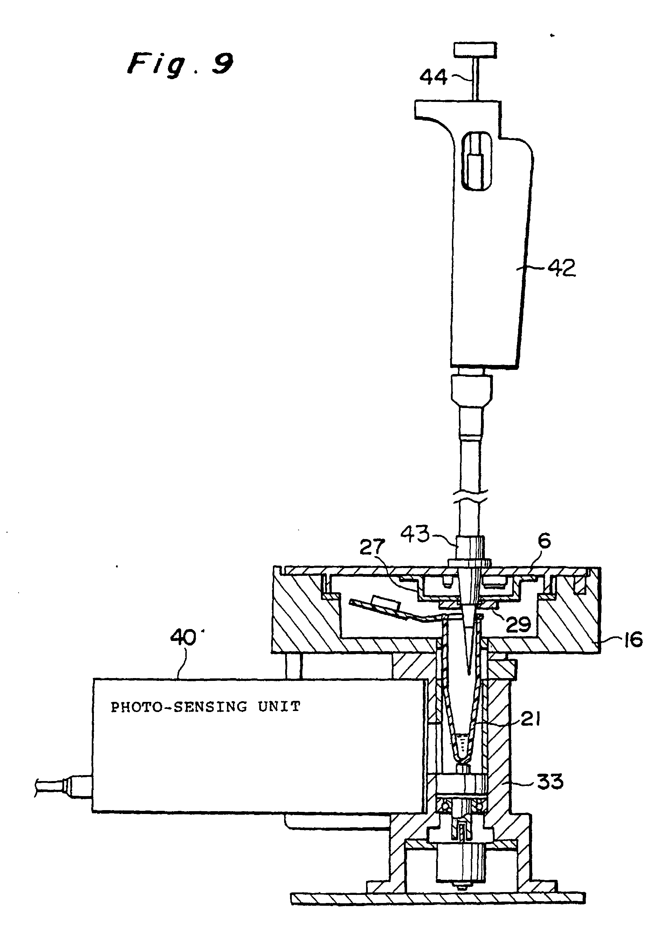

The operation procedure of the apparatus will now be described with reference to Figs. 8 and 9. Fig. 9 shows the position wherein the tip member 43 mounted on the distal end of the luminous reagent syringe 42 is inserted in the hollow portion of the tip guide 30.

A typical operation procedure is as follows. First, the cover 6 is opened, and the micro-sample tube 21 containing the sample solution M is inserted in the hollow space 32 of the cylindrical hollow chamber 33 via the through hole 22 of the holder 16.

The cover 6 is then closed, and the tip guide 30 is mounted in the through holes 24 and 28. Note that the tip guide 30 may be mounted in the through holes 24 and 28 in advance.

Subsequently, as shown in Fig. 9, the tip member 43 mounted on the distal end of the luminous reagent syringe 42 is inserted in the hollow, portion of the chip guide 30. In this case, the tip member 43 has a cassette-like structure in which a predetermined type of luminous reagent is stored. In addition, the tip member 43 has a conical outer shape to be accommodated in the hollow portion of the tip guide 30. Furthermore, the tip guide 30 consists of a material which does not transmit light. By operating an the plunger 44 of the luminous reagent syringe 42, the luminous reagent can be injected from the distal end portion of the tip guide 30 into the micro-sample tube 21. As shown in Fig. 9, when the tip member 43 is mounted, the hollow portion of the tip guide 30 is sealed, thereby preventing entrance of external light into the hollow space 32 of the cylindrical, hollow chamber 33 via the hollow portion of the tip guide 30.

The operational state is displayed on the liquid crystal display 13 on the basis of the above entry detection signal, open/closed position detection signal, and insertion detection signal. With this display 13, the user confirms that no external light leaks into the hollow space 32 of the cylindrical hollow chamber 33, and instructs to start the photo-sensing mechanism β.

In accordance with this instruction, the driving motor 36 is operated to rotate the cylindrical hollow chamber 370. When the openings 37 and 38 align with each other, the photo-sensing unit 40 starts detection. If these openings 37 and 38 do not align with each other, a the shutter mechanism is closed.

In addition, by transferring a signal output from the photo-sensing unit 40 to the liquid crystal panel via the controller 41, a change over time can be displayed in real time.

In such an observed state, the plunger 44 of the luminous reagent syringe 42 is operated to pour a predetermined amount of luminous reagent stored therein into the micro-sample tube 21, and light emitted from the sample solution M is detected.

As described above, according to the present invention, even with a very simple apparatus structure, luminescence from the sample solution M can be reliably imaged so that a high-precision quantitative analysis can be performed. In addition, monitor observation can be performed before the luminous reagent is mixed with the sample solution M, and luminescence can be observed in real time immediately after the mixing operation. Therefore, even a sample solution M which causes luminescence for only a short duration can be easily measured. Furthermore, measurement can be performed while the mixing amount of luminous reagent is properly adjusted. In particular, fine adjustment of the mixing amount can be performed by the above monitor observation. Contamination and the like caused by the sample solution M can be completely and easily prevented by only replacing or cleaning the micro-sample tube 21, the tip guide 30, and the tip member 43 as needed. As described above, this apparatus can provide many excellent effects in the field of quantitative analysis.

For example, this apparatus can be applied to quantitative analysis of ATP (adenosine triphosphate) which exists in an organism cell and serves to store and carry energy. The amount of ATP in a living cell is constant. However, the amount of ATP in a dead cell decreases because of autolysis. Therefore, a dead cell count can be analyzed by imaging luminescence of a specific wavelength which occurs when a predetermined type of luminous reagent is mixed with a sample solution M containing cells, and measuring the luminescence count. In addition, in measuring such an amount of ATP, a luciferin-luciferase reaction represented by luminescence from a firefly may be used. More specifically, when luciferin is coupled with ATP in the presence of luciferase and magnesium to produce AMP (adenosine monophosphate) upon dephosphorization, the luciferin is excited to cause luminescence having a peak intensity at 562 nm. By measuring this luminescence, quantitative analysis of ATP can be performed.

By measuring ATP using this embodiment, measurement of a viable cell count in food such as milk or juice, a sterility test on an injection, measurement of a bacterium count in urine in a clinical bacterium test, or the like can be easily performed.

As has been described above, according to the present invention, the problems posed in the prior art devices can be completely solved.

The detachable tip guide is mounted on the upper portion of the dark box housing, and the chip member is mounted on this tip guide, thereby maintaining the inner space of the housing in a perfectly dark state. In this dark state, only luminescence from the sample solution is detected by the photo-sensing unit. With this simple structure, a reduction in the size of the apparatus can be easily realized.

In addition, since the tip guide and the tip member can be replaced with new ones, contamination of the apparatus can be prevented, and the luminous reagent can be easily replaced with another luminous reagent to realize a quick measurement process. As is apparent, since the problem of contamination by deposits can be solved, accurate, high-precision measurement can be realized. Since the amount of luminous reagent mixed with the sample solution can be finely adjusted by operating the reagent syringe, delicate quantitative analysis or the like can be easily performed.

## Claims

1. An apparatus for measuring chemiluminescence, the apparatus comprising:
a housing (1) having a top opening (15);
a cover (6) to close the top opening, the cover having a through hole (24) whereby the distal end of a first vessel (42) containing a luminous reagent may be introduced into the housing (1) from externally thereof;
a hollow chamber (33) within the housing and having a side opening (38), the hollow chamber permitting a second vessel for a sample solution to be partially contained therein;
a holder (16) disposed in the housing (1) and incorporating the top opening (15) and having a recess (200) defining with the cover (6) a first space and having a through hole (22) whereby the first space communicates with the inner space of the hollow chamber (33) at the bottom of the recess (200);
a photo-sensing unit (40) disposed in the housing (1) for detecting luminescence emitted from the second vessel via the side opening (38) in the hollow chamber (33); and
a shutter mechanism (33,36,370) for selectively optically shielding luminescence from the photo-sensing unit (40);
**characterised in that** a ring (29) for holding the first vessel at a predetermined position, is disposed in the first space (20) and has a through hole (290) whereby the distal end of the first vessel (42) may be introduced into the second vessel (21), the diameter of the through hole (290) of the ring (29) being smaller than that of the through hole (22) of the cover (6).

2. An apparatus according to claim 1, further comprising:
a guide member (27) disposed in the first space (20) and contacting the cover (6) and defining therewith a second space (201), the guide member (27) having a through hole (28) whereby the distal end of the first vessel (42) may be introduced into the second vessel (21);
a photodiode (26) providing in the second space (201); and
a laser emitting diode (25) provided in the second space (201).

3. An apparatus according to claim 1 or claim 2, wherein the housing (1) the cover (6), the hollow chamber (33) and the holder (16) are of nontransparent material.

4. An apparatus according to any one of claims 1 to 3, further comprising an optical sensor (39) for detecting the presence or absence of the second vessel (21), the first optical sensor (39) forming part of the side wall of the hollow chamber (33).

5. An apparatus according to any one of claims 1 to 4, further comprising an optical sensor (31) for detecting the open or closed position of the cover (6) and disposed at a position facing the cover in the recess (200) of the holder (16).

6. An apparatus according to any one of claims 1 to 5, further comprising a seal member (23) for supporting the second vessel (21) mounted around the through hole (22).

7. An apparatus according to any one of claims 1 to 6, further comprising:
a tip guide (30) in the form of a hollow member detachably mounted in the through holes (24,28) of the cover (6) and the guide member (27); and
a tip member (43) attachable to a portion of the first vessel (21) whereby the tip guide (30) and the tip member (43) cooperate to seal the housing (1) when the distal end of the first vessel (42) carrying the tip member (43) is introduced via the tip guide (30) into the housing (1).

8. An apparatus according to any one of claims 1 to 7, wherein the shutter mechanism comprises:
a rotatable hollow chamber (370) for holding the second vessel (21) at a predetermined position, the rotatable hollow chamber being disposed in the hollow chamber (33) and having an opening (37) in a side wall thereof; and
a motor (36) for rotating the rotatable hollow chamber (37) and disposed in the hollow chamber (33).

9. An apparatus according to claim 8, wherein the rotatable hollow chamber (370) is of nontransparent material.

10. A method for measuring chemiluminescence using apparatus according to any one of claims 1 to 9, the method comprising the steps of:
disposing a second vessel (21) containing a sample solution in the housing (1) and closing the cover (6);
introducing the distal end of the first vessel (42) carrying the tip member (43) into the second vessel (21) by way of the ring (29);
introducing luminous reagent contained in the first vessel (42) into the second vessel (21); and
detecting luminescence from the second vessel (21).

11. A method according to claim 10, wherein detecting is carried out while optically shuttering luminescence from the second vessel (21) at predetermined time intervals.

## Patentansprüche

1. Gerät zum Messen von Chemo-Lumineszenz mit:
einem Gehäuse (1) mit einer oberen Öffnung (15);
einer Abdeckung (6) zum Verschließen der oberen Öffnung mit einem Durchlass (24), durch den das distale Ende eines ein leuchtendes Reagenz beinhaltenden ersten Behältnisses (42) von außen in das Gehäuse (1) einführbar ist;
einer hohlen Kammer (33) innerhalb des Gehäuses mit einer Seitenöffnung (38), wobei die hohle Kammer zulässt, dass sich ein zweites Behältnis für eine Probenlösung teilweise darin befindet;
einer Haltevorrichtung (16), die in dem Gehäuse (1) angeordnet ist, in die die obere Öffnung (15) eingebaut ist und die eine Vertiefung (200) aufweist, die mit der Abdeckung (6) einen ersten Raum definiert und die einen Durchlass (22) aufweist, durch den der erste Raum am Boden der Vertiefung (200) mit dem inneren Raum der hohlen Kammer (33) in Verbindung steht;
einer photosensitiven Einheit (40), die in dem Gehäuse (1) angeordnet ist, um eine von dem zweiten Behältnis über die Seitenöffnung (38) in die hohle Kammer (33) abgegebene Lumineszenz festzustellen; und
einen Blendenmechanismus (33, 36, 370) zum selektiven optischen Abschirmen der Lumineszenz von der photosensitiven Einheit (40);
**dadurch gekennzeichnet, dass** in dem ersten Raum (20) ein das erste Behältnis an einer vorgegebenen Position haltender Ring (29) angeordnet ist, der einen Durchlass (290) aufweist, durch den das distale Ende des ersten Behältnisses (42) in das zweite Behältnis (21) einführbar ist, wobei der Durchmesser des Durchlasses (290) des Rings (29) kleiner ist als der des Durchlass (22) der Abdeckung (6).

2. Gerät nach Anspruch 1, mit weiterhin:
einem Führelement (27), das in dem ersten Raum (20) angeordnet ist, die Abdeckung (6) berührt und mit ihr einen zweiten Raum (201) definiert, wobei die Führvorrichtung (27) einen Durchlass (28) aufweist, durch den das distale Ende des ersten Behältnisses (42) in das zweite Behältnis (21) einführbar ist;
einer in dem zweiten Raum (201) vorhandenen Photodiode (26); und
einer in dem zweiten Raum (201) vorhandenen laseremittierenden Diode (25).

3. Gerät nach Anspruch 1 oder 2, wobei das Gehäuse (1), die Abdeckung (6), die hohle Kammer (33) und die Haltevorrichtung (16) aus nicht transparentem Material sind.

4. Gerät nach einem der Ansprüche 1 bis 3, mit weiterhin
einem ersten optischen Sensor (39) zum Feststellen der Präsenz oder der Absenz des zweiten Behältnisses (21), der einen Teil der Seitenwand der hohlen Kammer (33) bildet.

5. Gerät nach einem der Ansprüche 1 bis 4, mit weiterhin
einem zweiten optischen Sensor (31) zum Feststellen einer offenen oder geschlossenen Position der Abdeckung (6), der in der Vertiefung (200) der Haltevorrichtung (16) an einer der Abdeckung gegenüberliegenden Position angeordnet ist.

6. Gerät nach einem der Ansprüche 1 bis 5, mit weiterhin einem dichtenden, um den Durchlass (22) angebrachten, Verschlusselement (23) zum Tragen des zweiten Behältnisses (21).

7. Gerät nach einem der Ansprüche 1 bis 6, mit weiterhin:
einer Spitzenführung (30) in Form eines hohlen Elements, das lösbar in dem jeweiligen Durchlass (24, 28) der Abdeckung (6) und des Führelements (27) befestigt ist, und
einem Spitzenelement (43), das an einem Teil des ersten Behältnisses (42) anbringbar ist, wobei die Spitzenführung (30) und das Spitzenelement (43) so zusammenwirken, dass das Gehäuse (1) dicht verschlossen ist, wenn das das Spitzenelement (43) tragende distale Ende des ersten Behältnisses (42) durch die Spitzenführung (30) in das Gehäuse (1) eingeführt ist.

8. Gerät nach einem der Ansprüche 1 bis 7, wobei der Blendenmechanismus umfasst:
eine das zweite Behältnis (21) an einer vorbestimmten Position haltende drehbare hohle Kammer (370), die in der hohlen Kammer (33) angeordnet ist und eine Öffnung (37) in einer ihrer Seitenwände aufweist; und
einen in der hohlen Kammer (33) angeordneten Motor (36) zum Drehen der drehbaren hohlen Kammer (37).

9. Gerät nach Anspruch 8, wobei die drehbare hohle Kammer (370) aus nicht transparentem Material besteht.

10. Verfahren zum Messen einer Chemo-Lumineszenz mit einem Gerät nach einem der Ansprüche 1 bis 9, folgende Schritte umfassend:
Anordnen eines zweiten Behältnisses (21) mit einer Probenlösung in dem Gehäuse (1) und Schließen der Abdeckung (6);
Einführen über den Ring (29) des, ein Spitzenelement (43) tragenden, distalen Endes des ersten Behältnisses (42) in das zweite Behältnis (21);
Einführen eines leuchtenden Reagenz, das in dem ersten Behältnis (42) beinhaltet ist, in das zweite Behältnis (21); und
Feststellen der Lumineszenz aus dem zweiten Behältnis (21).

11. Verfahren nach Anspruch 10, wobei der Feststellungsschritt ausgeführt wird, während die Lumineszenz des zweiten Behältnisses (21) zu bestimmten Zeitintervallen optisch abgeschirmt wird.

## Revendications

1. Dispositif de mesure de la chimioluminescence, le dispositif comprenant :
un boîtier (1) comportant une ouverture supérieure (15) ;
un couvercle (6) pour fermer l'ouverture supérieure, le couvercle ayant un trou débouchant (24) grâce à quoi l'extrémité distale d'un premier récipient (42) contenant un réactif lumineux peut être introduite dans le boîtier (1) par l'extérieur ;
une chambre creuse (33) à l'intérieur du boîtier et comportant une ouverture latérale (38), la chambre creuse permettant à un deuxième récipient pour une solution échantillon d'être partiellement contenu dedans ;
un support (16) disposé dans le boîtier (1) et incluant l'ouverture supérieure (15) et comportant un évidement (200) définissant avec le couvercle (6) un premier espace et comportant un trou débouchant (22) grâce à quoi le premier espace communique avec l'espace intérieur de la chambre creuse (33) au fond de l'évidement (200);
un module photodétecteur (40) disposé dans le boîtier (1) pour détecter la luminescence émise par le deuxième récipient via l'ouverture latérale (38) dans la chambre creuse (33) ; et
un mécanisme d'obturation (33, 36, 370) pour faire sélectivement écran optique entre la luminescence et le module photodétecteur (40) ;
**caractérisé en ce qu'**une bague (29) servant à tenir le premier récipient en une première position est disposée dans le premier espace (20) et comporte un trou débouchant (290) grâce à quoi l'extrémité distale du premier récipient (42) peut être introduite dans le deuxième récipient (21), le diamètre du trou débouchant (290) de la bague (29) étant inférieur à celui du trou débouchant (22) du couvercle (6).

2. Dispositif selon la revendication 1, comprenant en outre :
un élément de guidage (27) disposé dans le premier espace (20) et touchant le couvercle (6) et définissant avec celui-ci un deuxième espace (201), l'élément de guidage (27) comportant un trou débouchant (28) grâce à quoi l'extrémité distale du premier récipient (42) peut être introduite dans le deuxième récipient (21) ;
une photodiode (26) placée dans le deuxième espace (201) ; et
une diode laser (25) placée dans le deuxième espace (201).

3. Dispositif selon la revendication 1 ou 2, dans lequel le boîtier (1), le couvercle (6), la chambre creuse (33) et le support (16) sont en matériau non transparent.

4. Dispositif selon l'une quelconque des revendications 1 à 3, comprenant en outre un capteur optique (39) pour détecter la présence ou l'absence du deuxième récipient (21), le premier capteur optique (39) faisant partie de la paroi latérale de la chambre creuse (33).

5. Dispositif selon l'une quelconque des revendications 1 à 4, comprenant en outre un capteur optique (31) pour détecter la position ouverte ou fermée du couvercle (6) et disposé en une position faisant face au couvercle dans l'évidement (200) du support (16).

6. Dispositif selon l'une quelconque des revendications 1 à 5, comprenant en outre un élément d'étanchéité (23) pour supporter le deuxième récipient (21) monté autour du trou débouchant (22).

7. Dispositif selon l'une quelconque des revendications 1 à 6, comprenant en outre :
un guide de bout (30) sous la forme d'un élément creux monté de manière détachable dans les trous débouchants (24, 28) du couvercle (6) et de l'élément de guidage (27) ; et
un élément de bout (43) pouvant être fixé à une partie du premier récipient (21) grâce à quoi le guide de bout (30) et l'élément de bout (43) coopèrent pour fermer hermétiquement le boîtier (1) quand l'extrémité distale du premier récipient (42) portant l'élément de bout (43) est introduite dans le boîtier (1) via le guide de bout (30).

8. Dispositif selon l'une quelconque des revendications 1 à 7, dans lequel le mécanisme d'obturation comprend :
une chambre creuse rotative (370) pour tenir le deuxième récipient (21) en une position préalablement déterminée, la chambre creuse rotative étant disposée dans la chambre creuse (33) et comportant une ouverture (37) dans une paroi latérale de celle-ci ; et
un moteur (36) pour faire tourner la chambre creuse rotative (37) et disposé dans la chambre creuse (33).

9. Dispositif selon la revendication 8, dans lequel la chambre creuse rotative (370) est en matériau non transparent.

10. Procédé de mesure de la chimioluminescence utilisant un dispositif selon l'une quelconque des revendications 1 à 9, le procédé comprenant les étapes consistant à :
disposer un deuxième récipient (21) contenant une solution échantillon dans le boîtier (1) et fermer le couvercle (6) ;
introduire l'extrémité distale du premier récipient (42) portant l'élément de bout (43) dans le deuxième récipient (21) au moyen de la bague (29) ;
introduire un réactif lumineux contenu dans le premier récipient (42) dans le deuxième récipient (21) ; et
détecter la luminescence provenant du deuxième récipient (21).

11. Procédé selon la revendication 10, dans lequel la détection est effectuée tout en obturant optiquement la luminescence provenant du deuxième récipient (21) à des intervalles de temps préalablement déterminés.
